**Europäisches Patentamt**

(19) **European Patent Office**

**Office européen des brevets**

(11) Veröffentlichungsnummer: **0 114 292**

**B1**

(12) # EUROPÄISCHE PATENTSCHRIFT

(45) Veröffentlichungstag der Patentschrift:
18.03.87

(51) Int. Cl.⁴: **H 02 H 1/06**

(21) Anmeldenummer: **83112489.6**

(22) Anmeldetag: **12.12.83**

(54) Drehstromnetzteil.

(30) Priorität: **23.12.82 DE 3247808**

(43) Veröffentlichungstag der Anmeldung:
**01.08.84 Patentblatt 84/31**

(45) Bekanntmachung des Hinweises auf die Patenterteilung:
**18.03.87 Patentblatt 87/12**

(84) Benannte Vertragsstaaten:
**AT BE CH DE FR GB IT LI NL SE**

(56) Entgegenhaltungen:
**DE-A-2 653 453**
**DE-B-1 166 909**
**FR-A-1 408 249**
**GB-A-978 206**

(73) Patentinhaber: **Siemens Aktiengesellschaft Berlin und München, Wittelsbacherplatz 2, D-8000 München 2 (DE)**

(72) Erfinder: **Steinmüller, Günter, Dipl.- Ing., Laufamholzstrasse 65, D-8500 Nürnberg (DE)**

## Beschreibung

Die Erfindung betrifft ein Drehstromnetzteil mit Transformator-Primärwicklungen, die einerseits jeweils mit einem Phasenleiter eines Drehstromnetzes und andererseits mit dem Mittelpunktsleiter des Drehstromnetzes verbunden sind.

Derartige Drehstromnetzteile sind im Handel erhältlich.

Beispielsweise bei elektronischen Meß-, Tarif- und Schutzgeräten, die im EVU-Bereich eingesetzt werden, wird eine hohe Zuverlässigkeit der Stromversorgung gefordert. Dies kann man beispielsweise erreichen, indem man eine - z.B. durch Batteriepufferung - gesicherte Hilfsspannung erzeugt. In diesem Fall genügt ein Einphasennetzteil zur Erreichung der geforderten Zuverlässigkeit. Die Erzeugung einer gesicherten Hilfsspannung ist jedoch recht aufwendig. Häufig arbeitet man daher ohne gesicherte Hilfsspannung. In diesem Fall muß jedoch anstelle eines Einphasennetzteil ein Drehstromnetzteil eingesetzt werden, damit zumindest bei Ausfall einer Phase, möglichst aber auch bei Ausfall zweier Phasen des Drehstromnetzes die Stromversorgung aufrecht erhalten bleibt. Außerdem ist bei Netzen mit nicht starr geerdetem Mittelpunktleiter zu beachten, daß das Netzteil bei Erdschluß eines Phasenleiters weiter funktionieren soll.

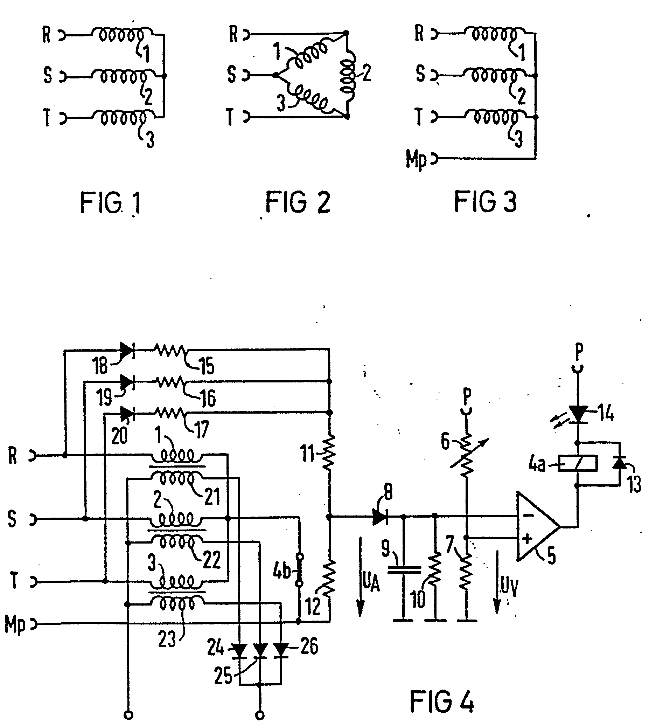

Bei einem Drehstromnetzteil gibt es drei · bekannte Möglichkeiten, die Transformator-Primärwicklungen zu schalten. Diese sollen zur Erläuterung der Problemstellung als Stand der Technik anhand der Figuren 1 bis 3 erörtert werden.

Bei der Schaltung nach Figur 1 sind drei Transformator-Primärwicklungen 1 bis 3 gegen einen künstlichen Sternpunkt geschaltet. Ein Erdschluß würde die Funktion einer solchen Schaltung nicht beeinträchtigen. Bei Ausfall einer Phasenspannung würde nur noch eine verringerte Sekundärspannung zur Verfügung stehen. Bei Ausfall zweier Phasenspannungen könnte dagegen in keiner der Primärwicklungen Strom fließen, d.h. die Stromversorgung würde ausfallen.

Bei der Schaltung nach Figur 2 sind die drei Primärwicklungen 1 bis 3 im Dreieck geschaltet. Hierbei würde ein Erdschluß oder der Ausfall einer Phasenspannung die Funktion nicht beeinträchtigen. Dagegen würde auch in diesem Fall der Ausfall zweier Phasenspannungen zum Ausfall der Stromversorgung führen.

Bei der Schaltung nach Figur 3 schließlich sind, die drei Primärwicklungen 1 bis 3 mit dem Mittelpunktsleiter Mp verbunden. In diesem Fall könnte auch bei Ausfall zweier Phasenspannungen die Stromversorgung über die intakte Phase und den Mittelpunktsleiter aufrechterhalten werden. Bei einem Erdschluß, der in nicht starr geerdeten Netzen u.U. über mehrere Stunden anstehen kann, würde dagegen eine Überlastung des Transformators auftreten, da in diesem Fall die Spannungsbelastung um den Faktor $\sqrt{3}$ ansteigt.

Aufgabe der Erfindung ist es daher, ein Drehstromnetzteil so auszubilden, daß es sowohl bei Ausfall zweier Phasenspannungen als auch bei Erdschluß voll funktionsfähig bleibt.

Diese Aufgabe wird erfindungsgemäß dadurch gelöst, daß die Verbindung der Transformator-Primärwicklungen mit dem Mittelpunktsleiter über einen als Öffner ausgebildetem Schaltkontakt eines Relais erfolgt und daß die Betätigungsspule des Relais mit einer Erdschluß-Überwachungseinheit verbunden ist, wobei der Schaltkontakt nur im Falle eines Erdschlusses im Drehstromnetz geöffnet wird. Hierbei sind die Primärwicklungen also im Normalfall mit dem Mittelpunktsleiter verbunden, so daß das Netzteil auch bei Ausfall zweier Phasenspannungen funktionsfähig bleibt. Wenn jedoch im Netz ein Erdschluß auftritt, so wird die Verbindung mit dem Mittelpunktsleiter aufgetrennt, so daß keine Überlastung des Transformators auftreten kann. Auch bei Erdschluß und der dabei erfolgten Auftrennung der Verbindung mit dem Mittelpunktsleiter bleibt das Drehstromnetzteil noch funktionsfähig, solange mindestens zwei Phasenspannungen vorhanden sind. Bei gleichzeitigem Ausfall einer Phasenspannung wird allerdings die zur Verfügung stehende Sekundärspannung verringert. Wenn bei einem Erdschluß-gleichzeitig noch zwei Phasenspannungen ausfallen würden, wäre zwar die Stromversorgung unterbrochen, dieser Fall ist jedoch so unwahrscheinlich, daß er praktisch außer Betracht bleiben kann.

Vorteilhafterweise besteht die Erdschluß-Überwachungseinheit aus einer Grenzwertschaltung, die eingangsseitig über einen Maximalwertdetektor mit einem künstlichen Sternpunkt und ausgangsseitig mit der Betätigungsspule des Relais verbunden ist. Die Erschluß-Überwachungseinrichtung kann also damit besonders einfach realisiert werden. Der künstliche Sternpunkt ist zweckmäßigerweise der Verbindungspunkt dreier Widerstände, die andererseits jeweils mit einem Phasenleiter des Drehstromnetzes verbunden sind. Dabei wird vorteilhafterweise in Serie zu jedem Widerstand eine Diode angeordnet. Damit wird erreicht, daß bei Erdschluß am Sternpunkt auch dann noch eine zum Ansprechen der Grenzwertschaltung ausreichend hohe Spannung zur Verfügung steht, wenn gleichzeitig eine Phasenspannung ausfällt.

Ein Ausführungsbeispiel der Erfindung wird nachfolgend anhand der Figuren 4 bis 9 näher erläutert.

Beim Ausführungsbeispiel nach Figur 4 sind die drei Transformator-Primärwicklungen 1 bis 3 einerseits jeweils mit einer Phase R, S bzw. T und andererseits untereinander verbunden. Der gemeinsame Verbindungspunkt der drei Primärwicklungen 1 bis 3 ist über einen als Öffner ausgebildeten Schaltkontakt 4b eines Relais 4 mit dem Mittelpunktsleiter MP verbunden. Im Ausführungsbeispiel ist für jede Phase R, S, T ein gesonderter Transformator, jeweils mit einer Primärwicklung 1, 2 bzw. 3 und einer Sekundärwicklung 21, 22 bzw. 23 vorgesehen. Man könnte natürlich auch einen Drehstromtransformator mit einem gemeinsamen Kern für alle drei Phasen vorsehen. Die Sekundärwicklungen 21 bis 23 sind im Stern geschaltet und über je eine Gleichrichterdiode 24 bis 26 mit einer Ausgangsklemme verbunden.

An jeder Phase R, S, T liegt außerdem jeweils die Reihenschaltung einer Diode 18, 19 bzw. 20 und eines Widerstandes 15, 16 bzw. 17. Die freien Anschlüsse der Widerstände 15 bis 17 sind miteinander verbunden, wobei der Verbindungspunkt wiederum über einen aus den Widerständen 11 und 12 bestehenden Spannungsteiler am Mittelpunktsleiter MP liegt. Die Anzapfung des Spannungsteilers ist mit einem Maximalwertgeber verbunden. Dieser besteht aus der Parallelschaltung eines Kondensators 9 und eines Widerstands 10, die über eine Diode 8 mit der Anzapfung des Spannungsteilers verbunden ist. Die Diode 8 weist dieselbe Leitrichtung wie die Dioden 18 bis 20 auf. Dem Maximalwertdetektor ist eine Grenzwertschaltung nachgeschaltet, die einen Operationsverstärker 5 enthält. Dabei ist der invertierende Eingang des Operationsverstärkers 5 mit dem Verbindungspunkt von Diode 8 und Widerstand 10 des Maximalwertdetektors verbunden. Dem nichtinvertierenden Eingang des Operationsverstärkers 5 wird über einen aus den Widerständen 6 und 7 bestehenden Spannungsteiler eine Vergleichsspannung $U_V$ zugeführt, deren Wert mit dem variablen Widerstand 6 einstellbar ist. Diese Vergleichsspannung wird, wie nachfolgend noch erläutert, so eingestellt, daß die Ausgangsspannung des Operationsverstärkers 5 im Normalfall positiv ist und nur im Erdschlußfall negativ wird. Zwischen einem positiven Versorgungspotential P und dem Ausgang des Operationsverstärkers 5 liegt die Reihenschaltung einer Leuchtdiode 14 und der Betätigungsspule 4a eines Relais 4. Mit der Leuchtdiode 14 wird angezeigt, wenn das Relais 4 anspricht. Der Betätigungsspule 4a ist außerdem eine Freilaufdiode 13 parallel geschaltet, die Abschaltspannungsspitzen verhindert.

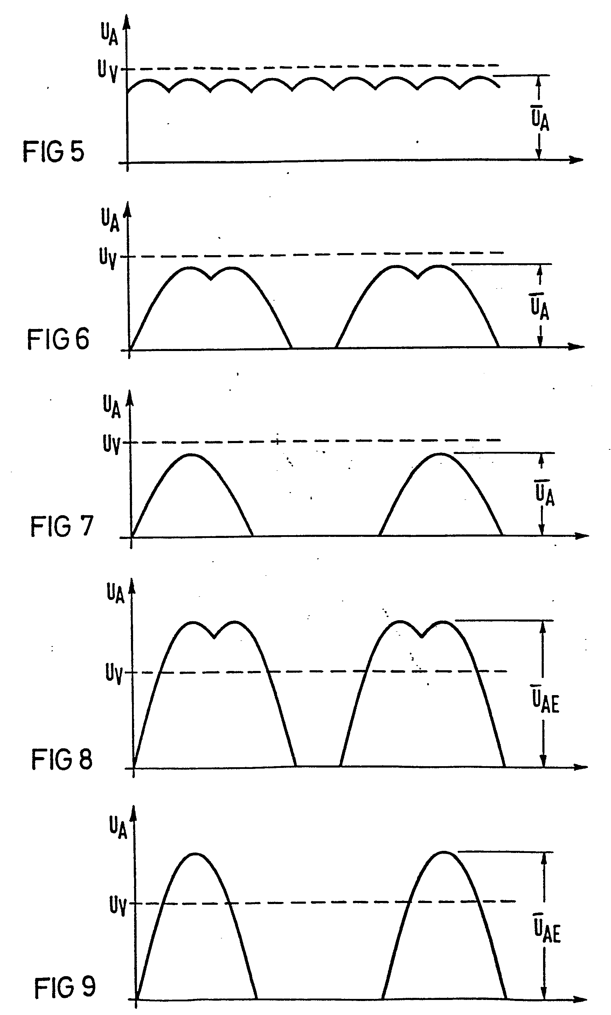

Die Funktion der Erdschluß-Überwachung wird nachfolgend anhand der Figuren 5 bis 9 erläutert. Figur 5 zeigt die Ausgangsspannung $U_A$ an dem aus den Widerständen 11 und 12 bestehenden Spannungsteiler, wenn alle Netzphasen R, S, T intakt sind. In diesem Fall steht nach dem Maximalwertdetektor 8, 9 eine Spannung $\hat{U}_A$ an, die gleich dem Scheitelwert der Spannung $U_A$ und damit proportional zum Scheitelwert der einzelnen Phasenspannungen ist. Der Kondensator 9 wird nämlich über die Diode 8 auf den Scheitelwert $\hat{U}_A$ aufgeladen und über den Widerstand 10 nur sehr langsam im Vergleich zur Periodendauer der Netzspannung entladen. Die Figuren 6 und 7 zeigen die Spannung $U_A$ bei Ausfall einer bzw. zweier Phasenspannungen. Dabei wird deutlich, daß der Scheitelwert $\hat{U}_A$ dabei unverändert bleibt. Die Vergleichsspannung $U_V$ für den Operationsverstärker 5 ist so eingestellt, daß er auf diesen Scheitelwert $\hat{U}_A$ nicht anspricht, d.h. $U_V > \hat{U}_A$.

Wenn nun jedoch eine der Phasen R, S, T einen Erdschluß aufweist, so nimmt der Mittelpunktsleiter MP "Phasenpotential" an. In diesem Fall steigt die Spannung zwischen einer intakten Phase und dem Mittelpunktsleiter MP um das $\sqrt{3}$-fache auf den Wert $\hat{U}_{AE}$:
$$\hat{U}_{AE} = \sqrt{3}\,\hat{U}_A$$
Dieser Fall ist in Figur 8 dargestellt. Die Vergleichsspannung $U_V$ für den Operationsverstärker 5 ist mit $U_V < \hat{U}_{AE}$ so gewählt, daß der Operationsverstärker 5 in diesem Fall eine negative Ausgangsspannung annimmt und somit durch die Betätigungsspule 4a der Kontakt 4b geöffnet wird.

Wenn mit dem Erdschluß einer Phase der Ausfall einer weiteren Phasenspannungen zusammenfällt, so nimmt die Spannung $U_A$ den in Figur 9 dargestellten Verlauf an. Dabei ist ersichtlich, daß sich der Scheitelwert $\hat{U}_{AE}$ dabei nicht ändert. Auch in diesem Fall wird daher der Kontakt 4b geöffnet.

Damit wurde also gezeigt, daß der Schalter 4b geschlossen bleibt, sofern im Drehstromnetz kein Erdschluß vorliegt. Damit bleibt das Netzteil auch bei Ausfall zweier Phasen funktionsfähig. Im Erdschlußfall wird dagegen der Kontakt 4b, d.h. die Verbindung der Primärwicklungen 1 bis 3 mit dem Mittelpunktsleiter MP geöffnet, so daß das Netzteil erdschlußsicher ist.

## Patentansprüche

1. Drehstromnetzteil mit Transformator-Primärwicklungen (1-3), die einerseits jeweils mit je einem Phasenleiter (R, S, T) eines Drehstromnetzes und andererseits mit dem Mittelpunktsleiter (Mp) des Drehstromnetzes verbunden sind, dadurch gekennzeichnet, daß die Verbindung der Transformator-Primärwicklungen (1 - 3) mit dem Mittelpunktsleiter (Mp) über einen als öffner ausgebildeten Schaltkontakt (4b) eines Relais (4) erfolgt und daß die Betätigungsspule (4a) des Relais (4) mit einer Erdschluß-Überwachungseinheit (5-12, 15-20) verbunden ist, wobei der Schaltkontakt (4b) nur im Falle eines Erdschlusses in dem Drehstromnetz geöffnet wird.

2. Drehstromnetzteil nach Anspruch 1, dadurch gekennzeichnet, daß die Erdschluß-Überwachungseinheit (5-12, 15-20) aus einer Grenzwertschaltung ( 5 - 7) besteht, die eingangsseitig über einen Maximalwertdetektor (8, 9) mit einem künstlichen Sternpunkt und ausgangsseitig mit der Betätigungsspule (4a) des Relais (4) verbunden ist.

3. Drehstromnetzteil nach Anspruch 2, <u>dadurch gekennzeichnet</u>, daß der künstliche Sternpunkt der Verbindungspunkt dreier Widerstände (15-17) ist, die andererseits jeweils mit einem Phasenleiter (R, S, T) des Drehstromnetzes verbunden sind.

4. Drehstromnetzteil nach Anspruch 3, <u>dadurch gekennzeichnet</u>, daß in Serie zu jedem Widerstand (15 - 17) eine Diode (18 - 20) angeordnet ist.

## Claims

1. A three-phase power supply unit comprising transformer primary windings (1-3) respectively connected to a phase conductor (R, S, T) and to the central conductor (Mp) of the three-phase mains, <u>characterised in that</u> the connection of the transformer primary windings (1-3) to the central conductor (Mp) is effected by a swiching contact (4b) of a relay (4), which switching contact is a make contact, and that the actuating coil (4a) of the relay (4) is connected to an earth-leakage monitoring unit (5-12, 15-20), where the switching contact (4b) is only opened in the event of an earth leakage in the three-phase network.

2. A three phase power supply unit as claimed in Claim 1, <u>characterised in that</u> the earth leakage monitoring unit (5-12, 15-20) consists of a limit value circuit (5-7) which is connected at the input end to an artificial neutral point by a maximum value detector (8,9) and to the actuating coil (4a) of the relay (4) at the output end.

3. A three-phase power supply unit as claimed in Claim 2, <u>characterised in that</u> the artificial neutral point is the connecting point of three resistors (15-17) each connected to a respective phase conductor (R, S, T) of the three-phase network.

4. A three-phase power supply unit as claimed in Claim 3, <u>characterised in that</u> a diode (18-20) is arranged in series with each resistor (15-17).

## Revendications

1. Dispositif d'alimentation en courant triphasé comportant des enroulements primaires de transformateur (1-3), qui sont chacun reliés d'un côté à un fil de phase (R, S, T) d'un réseau triphasé et de l'autre côté au fil neutre (Mp) du réseau triphasé, caractérisé en ce que la liaison entre les enroulements primaires (1-3) de transformateur et le fil neutre (Mp) passe par un contact de repos (4b) d'un relais (4) et que la bobine d'excitation (4a) du relais (4) est connectée à une unité de surveillance contre les défauts à la terre (5-12, 15-20), le contact de repos (4b) étant seulement ouvert en cas de défaut à la terre dans le réseau triphasé.

2. Dispositif selon la revendication 1, caractérisé en ce que l'unité de surveillance (5-12, 15-20) comprend un circuit de valeur limite (5-7) dont l'entrée est connectée à travers un détecteur de valeur maximale (8, 9) à un point neutre artificiel et dont la sortie est connectée à la bobine d'excitation (4a) du relais (4).

3. Dispositif selon la revendication 2, caractérisé en ce que le point neutre artificiel est la jonction de trois résistances (15-17) dont les autres côtés sont reliés chacun à un fil de phase (R, S, T) du réseau triphasé.

4. Dispositif selon la revendication 3, caractérisé en ce qu'une diode (18-20) est montée en série avec chaque résistance (15-17).

FIG. 1　　　FIG 2　　　FIG 3

FIG 4

$U_A$

$U_V$

$\overline{U}_A$

FIG 5

$U_A$

$U_V$

$\overline{U}_A$

FIG 6

$U_A$

$U_V$

$\overline{U}_A$

FIG 7

$U_A$

$U_V$

$\overline{U}_{AE}$

FIG 8

$U_A$

$U_V$

$\overline{U}_{AE}$

FIG 9